# EUROPEAN PATENT APPLICATION

(11) **EP 4 693 544 A1**
(43) Date of publication of application: **11.02.2026**
(21) Application number: 24891870.8
(22) Date of filing: 13.11.2024
(51) Int. Cl.: H01M 10/04, H01M 50/105, H01M 4/04, H01M 10/44, H01M 10/0565, H01M 10/052

(54) **SECONDARY BATTERY AND METHOD FOR MANUFACTURING SAME**

(30) Priority: 14.11.2023 KR 20230157525
(71) Applicant: LG Energy Solution, Ltd., Seoul 07335 (KR)
(72) Inventor: KIM, Hyosik, Daejeon 34122 (KR); RYU, Jihoon, Daejeon 34122 (KR)
(74) Representative: Goddar, Heinz J.
(86) International application number: PCT/KR2024/096543
(87) International publication number: WO 2025/105924

(57) **Abstract**

The method for manufacturing a secondary battery according to various embodiments may comprise the steps of: preparing at least one pouch sheet having a masking tape attached thereto; placing an electrode assembly inside a battery case formed by overlapping the at least one pouch sheet; injecting an electrolyte into the battery case and sealing the edge of the battery case; performing formation with regard to the secondary battery; cutting a partial region of the battery case, removing the masking tape, and degassing same; and resealing the region corresponding to the removed masking tape. Other additional embodiments are possible.

## Description

### TECHNICAL FIELD

The present disclosure relates to a secondary battery, a method of manufacturing the same, and a pouch sheet used for manufacturing the secondary battery.

### BACKGROUND ART

Secondary batteries can be charged and discharged, so they are widely used in portable mobile devices such as digital cameras, mobile phones, and laptops, and especially recently, with the rapid development of the electrical, electronic, communications and computer industries, the demand for high-performance, highstability secondary batteries is gradually increasing.

In particular, for pouch-type secondary batteries, a pouch outer shell composed of a multi-layer film of a metal layer (foil) and a synthetic resin layer coated on the upper and lower surfaces of the metal layer is used for the exterior configuration, and when compared to cylindrical secondary batteries or square secondary batteries using metal cans, since weight can be significantly reduced, lightweighting is possible and the batteries can be transformed into various shapes. Thus, pouch-type secondary batteries are receiving a lot of attention and various development efforts are being carried out accordingly.

Even though liquid electrolytes are widely used in secondary batteries, there is a possibility of leakage and there is a problem that the solvent has the characteristics of volatility and instability. Accordingly, various studies are being conducted recently to commercialize polymer electrolytes such as gel polymer electrolytes as an electrolyte to replace liquid electrolytes.

Gel polymer electrolytes are gaining attention since the gel polymer electrolytes have superior electrochemical safety compared to liquid electrolytes and can maintain the thickness of the battery.

However, when a secondary battery is manufactured using the existing manufacturing methods by applying a gel polymer electrolyte, particularly prominent problems include complete sealing not being achieved during the re-sealing process due to the characteristics of the gel polymer electrolyte, and that the gelled electrolytes appear to stain and detract from the aesthetic appeal.

Various exemplary embodiments of the present disclosure are devised to solve at least some of the problems of the prior art as described above, and are to provide a manufacturing method that can effectively prevent electrolyte from remaining in the re-sealed area during the manufacturing process of a secondary battery through a simple method using a pouch sheet with masking tape attached, a secondary battery manufactured by the same, and a pouch sheet used for manufacturing the secondary battery.

According to various exemplary embodiments of the present disclosure, a method of manufacturing a secondary battery includes preparing at least one pouch sheet to which a masking tape is attached, accommodating an electrode assembly inside a battery case formed by overlapping the at least one pouch sheet, injecting an electrolyte inside the battery case and sealing an edge of the battery case, performing formation on the secondary battery, cutting a portion of an area of the battery case, removing the masking tape and degassing, and re-sealing an area corresponding to the removed masking tape.

According to various exemplary embodiments, provided is a pouch sheet to manufacture a battery case of a secondary battery, the pouch sheet including a recess to accommodate an electrode assembly, a masking tape detachably attached to a side adjacent to the recess, wherein the masking tape extends along a length direction of the area that is re-sealed in order to correspond at least partially to the area that is re-sealed in a process of manufacturing the secondary battery.

According to the exemplary embodiments of the present disclosure, by preventing electrolyte from remaining in the re-sealed area of the secondary battery, various problems that may arise due to improper sealing on the re-sealed area may be effectively prevented, for example, the problem of shortening the life of the battery due to oxygen or moisture entering the case of the secondary battery.

In addition, it may prevent defects in the appearance of the secondary battery and enhance its aesthetics.

### BRIEF DESCRIPTION OF DRAWINGS

FIG. 1 is a schematic exploded perspective view of a secondary battery according to an exemplary embodiment of the present disclosure.
FIG. 2a is a front view of a pouch sheet used in manufacturing a secondary battery case according to an exemplary embodiment of the present disclosure.
FIG. 2b is a cross-sectional view of the pouch sheet of FIG. 2a cut along line A-A of FIG. 2a.
FIG. 2c is a cross-sectional view of the pouch sheet of FIG. 2a cut along line B-B of FIG. 2A.
FIG. 3 is a schematic front view of a pouch sheet for forming a case of a secondary battery according to an exemplary embodiment of the present disclosure.
FIG. 4 is a schematic front view illustrating a sealed area and a re-sealed area in a pouch sheet according to an exemplary embodiment of the present disclosure.
FIG. 5 is a schematic side view illustrating a sealed area and a re-sealed area in a pouch sheet according to an exemplary embodiment of the present disclosure.
FIG. 6 is a schematic front view of a pouch sheet for explaining an area to which masking tape is attached in the pouch sheet according to an exemplary embodiment of the present disclosure.
FIG. 7 is a schematic side view of a pouch sheet for explaining an area to which masking tape is attached in the pouch sheet according to an exemplary embodiment of the present disclosure.
FIG. 8a is a schematic front view of a pouch sheet for explaining an area to which masking tape is attached in the pouch sheet according to an exemplary embodiment of the present disclosure.
FIG. 8b is a drawing schematically illustrating the shape of masking tape attached to the pouch sheet of FIG. 8a.
FIG. 9 is an image of the peripheral area of the re-sealed area of a secondary battery manufactured by a manufacturing method according to a comparative exemplary embodiment.
FIG. 10 is an image of a peripheral area of a re-sealed area of a secondary battery manufactured by a manufacturing method according to an exemplary embodiment of the present disclosure.

### DETAILED DESCRIPTION

Prior to the detailed description of the present disclosure, terms or words used in the specification and claims should not be construed as limited to their common or dictionary meanings. Further, the terms or words should be interpreted with meaning and concept consistent with the technical idea of the present disclosure based on the principle that the inventor may appropriately define the concept of terms in order to explain his or her invention in the best way. Therefore, exemplary embodiments described in the present disclosure are only the most preferred embodiments of the present disclosure, and the exemplary embodiments do not represent the entire technical idea of the present disclosure. Accordingly, at the time of filing the present disclosure, there may be various equivalents and modifications that can replace them.

The same reference numeral or sign shown in each drawing attached to the specification may represent parts or components that perform substantially the same function. For convenience of description and understanding, different embodiments may be described using the same reference numerals or symbols. In other words, even if a component or an element having the same reference numeral is shown in multiple drawings, the multiple drawings may not all represent one exemplary embodiment.

In the following description, singular expressions include plural expressions unless the context clearly dictates otherwise. It will be understood that, when an element (for example, a first element) is "(operatively or communicatively) coupled with/to" or "connected to" another element (for example, a second element), the element may be directly coupled with/to another element, and there may be an intervening element (for example, a third element) between the element and another element. The terms "have," "may have," "include," and "may include" as used herein indicate the presence of corresponding features (for example, elements such as numerical values, functions, operations, or parts), and do not preclude the presence of additional features.

Further, in the following description, expressions such as an upper side, top, a lower side, bottom, a side, front and a back side are expressed based on the direction shown in the drawing. If the direction of the object changes, it may be expressed differently.

Further, in the specification and claims, terms including ordinal numbers such as "first," "second," etc. may be used to distinguish between components or elements. These ordinal numbers are used to distinguish identical or similar components from each other, and the meaning of the terms should not be interpreted limitedly due to the use of such ordinal numbers. For example, components or elements combined with these ordinal numbers should not be interpreted as having a limited order of use or arrangement based on the number. If necessary, each ordinal number may be used interchangeably.

Hereinafter, exemplary embodiments of the present disclosure will be described in detail with reference to the attached drawings. However, the spirit of the present disclosure may not be limited to the exemplary embodiments. For example, a person skilled in the art who understands the spirit of the present disclosure may suggest other exemplary embodiments that are included within the scope of the spirit of the present disclosure through addition, change, or deletion of components or elements: however, such exemplary embodiments are intended to be included within the scope of the present disclosure. The shapes and sizes of elements in the drawings may be exaggerated for clearer explanation.

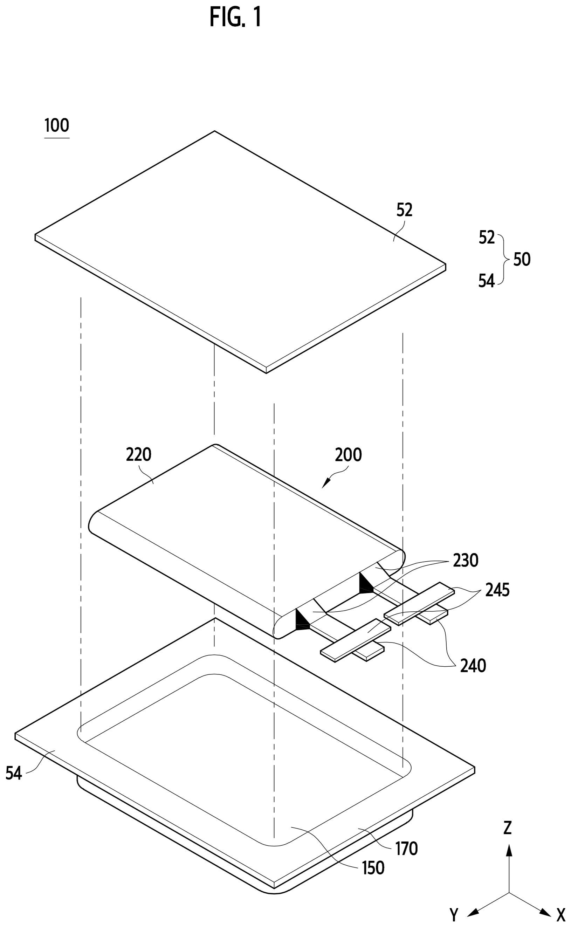

FIG. 1 is a schematic exploded perspective view of a secondary battery 100 according to an exemplary embodiment of the present disclosure.

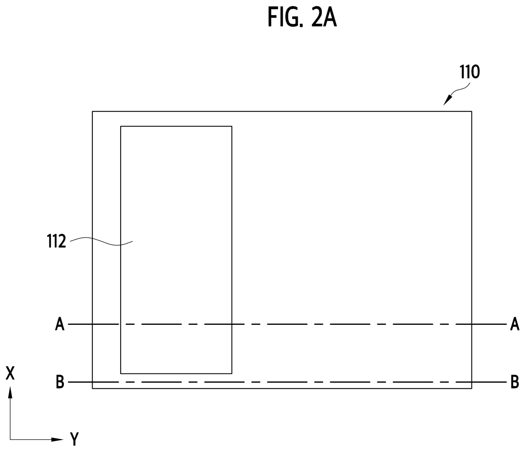

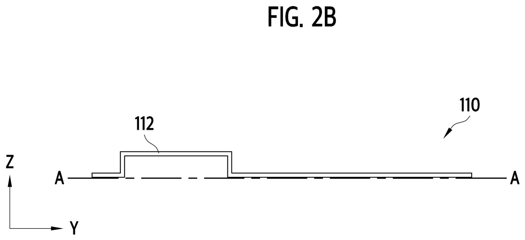

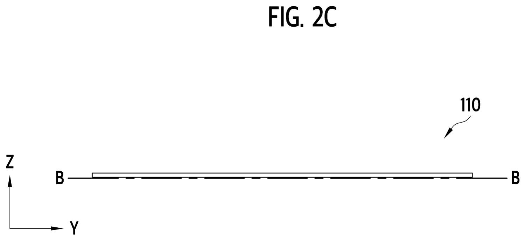

FIG. 2a is a front view of a pouch sheet 110 used in manufacturing a secondary battery case according to an exemplary embodiment of the present disclosure. FIG. 2b is a cross-sectional view of the pouch sheet 110 of FIG. 2a cut along line A-A. FIG. 2c is a cross-sectional view of the pouch sheet 110 of FIG. 2a cut along line B-B.

Referring to FIG. 1 to FIG. 2c, the secondary battery 100 according to various exemplary embodiments may include an electrode assembly 200 and a battery case 50 accommodating the electrode assembly 200.

According to various exemplary embodiments, the electrode assembly 200 may include a plurality of electrodes 220, an electrode tab 230 extending from at least one of the plurality of electrodes 220, and a separating film interposed between the plurality of electrodes 220. The plurality of electrodes 220 are composed of a cathode and an anode, and for example, the electrode assembly 200 may have a structure in which a cathode, a separating film and an anode are sequentially stacked.

The anode may include an anode collector and an anode active material laminated on the anode collector. For example, the anode may be formed by applying the mixture including at least an anode active material, a conductive material and a binder to the anode collector formed from materials such as copper alloy. Meanwhile, in an exemplary embodiment, the anode may also consist of a monolithic lithium metal sheet instead of having the anode collector and the anode active material separately. As a flat sheet member made of lithium metal (lithium or an alloy material containing lithium), the lithium metal sheet may be formed entirely of lithium metal, for example, with the anode and the anode tab extending from the end of the anode formed as one piece.

The cathode may include a cathode collector and a cathode active material laminated to the cathode collector. For example, the cathode may be formed by applying the mixture including at least the cathode active material, a conductive material and a binder to a cathode collector formed from a material such as aluminum alloy. For example, the cathode active material may be composed of lithium manganese oxide, lithium cobalt oxide, lithium nickel oxide and lithium iron phosphate, or a compound containing at least one of them, or mixture of them. In another exemplary embodiment, for the cathode active material, a sulfur series material having an S-S bond may be used.

The separating film may be configured to prevent electrical shorting between electrodes as well as be impregnated with electrolytes to allow ions to pass therethrough. For example, the separating film may be formed of a porous polymer film or a porous non-woven fabric. However, the separating film applied to the secondary battery according to various exemplary embodiments of the present disclosure is not necessarily limited to the materials, and it is apparent that various materials that may be commonly applied in secondary batteries may be used.

The electrode tab 230 may include a cathode tab extending from an end of the cathode and an anode tab extending from an end of the anode. The electrode tab 230 may be electrically connected to an electrode lead 240, which acts as a terminal in the secondary battery 100. For example, the cathode tab is formed of aluminum (Al) material, and the anode tab may be formed of copper (Cu) or lithium (Li) material.

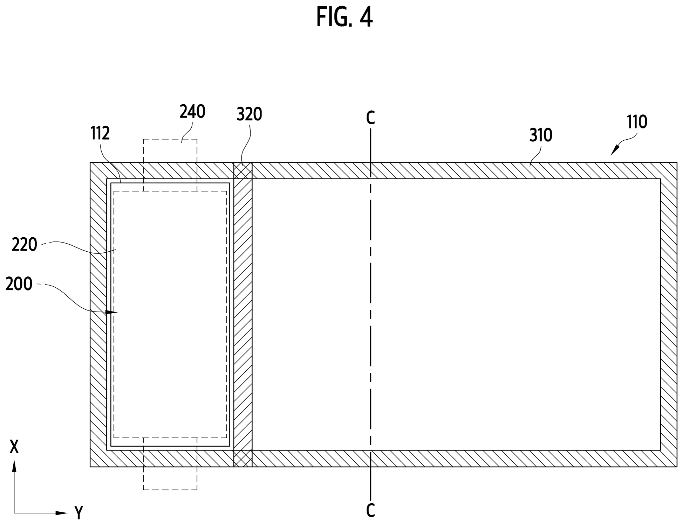

In various exemplary embodiments, the secondary battery 100 may include a unidirectional secondary battery in which the cathode tab and the anode tab of the electrode tab 230 extend in the same direction, or a bidirectional secondary battery in which the cathode tab and the anode tab extend in opposite directions. For example, various exemplary embodiments of the present disclosure may be applied to a unidirectional secondary battery such as the one illustrated in FIG. 1, but may also be applied to bidirectional secondary batteries, such as the one illustrated in FIG. 4.

The electrode lead 240 may be electrically connected to the electrode assembly 200 (for example, the electrode tab 230 of the electrode assembly 200). For example, the electrode lead 240 may include a cathode lead that connects to a cathode tab extending from the cathode and an anode lead electrically connected to an anode tab extending from the anode. For this, the electrode lead 240 may be formed of a conductive metal material. In an exemplary embodiment, the electrode lead 240 may be formed by at least one of nickel, copper, nickel-plated copper and aluminum. The electrode lead 240 and the electrode tab 230 may be electrically connected by various welding methods including ultrasonic welding, but in addition thereto, physical fastening methods using rivets may be applied.

In an exemplary embodiment, an insulating member 245 may be placed in an area of the electrode lead 240. For example, the insulating member 245 may be formed of a material having insulating and adhesive properties (for example, a thermoplastic resin), and may be bonded to a portion of the battery case 50 while wrapping a portion of the electrode lead 240, thereby ensuring electrical insulation between the electrode lead 240 and the battery case 50. While the battery case 50 is being sealed in the area where the electrode lead 240 protrudes from the inside to the outside of the battery case 50, the insulating member 245 may act as a buffer to prevent damage to the electrode lead 240 that may occur during the sealing process of the battery case 50, at the same time.

The battery case 50 may include a receiving part 150, which is an internal space in which the electrode assembly 200 may be accommodated and a sealing part 170, which is an area sealed to shield the electrode assembly 200 from at least a portion of the edge of the receiving part 150.

The battery case 50 may be formed by combining an upper case 52 and a lower case 54. The upper case 52 and the lower case 54 may be joined to each other, for example, by compression or heat welding in the sealing part 170 area, and accordingly, external foreign substances or moisture may be prevented from entering the electrode assembly 200 located inside the receiving part 150.

For example, the battery case 50 may be formed by at least one pouch sheet 110 composed of a flexible material (for example, an aluminum laminate sheet). The pouch sheets 110 may be fabricated to include a recess on the inside to form the receiving part 150, which is a space for accommodating the electrode assembly 200. The recess formed in the pouch sheet 110 may correspond to the shape and size of the electrode assembly 200.

In FIG. 1, only the lower case 54 includes a recess shape for configuring the receiving part 150, and the upper case 52 is depicted as not including a separate recess-shaped structure. However, it may of course be understood that, in various exemplary embodiments, one receiving part 150 is implemented by combining the upper case 52 and the lower case 54 since the upper case 52 also includes a recess shape forming the receiving part 150, as with the lower case 54. For example, the upper case 52 and the lower case 54 may have a practically symmetrical structure, and may be formed by the pouch sheet 110 including a recess 112 as illustrated in FIG. 2a to FIG. 2c, respectively. Further, by contrast, as illustrated in FIG. 1, it is also possible that the upper case 52 does not have a recess shape and only the lower case 54 has a recess shape.

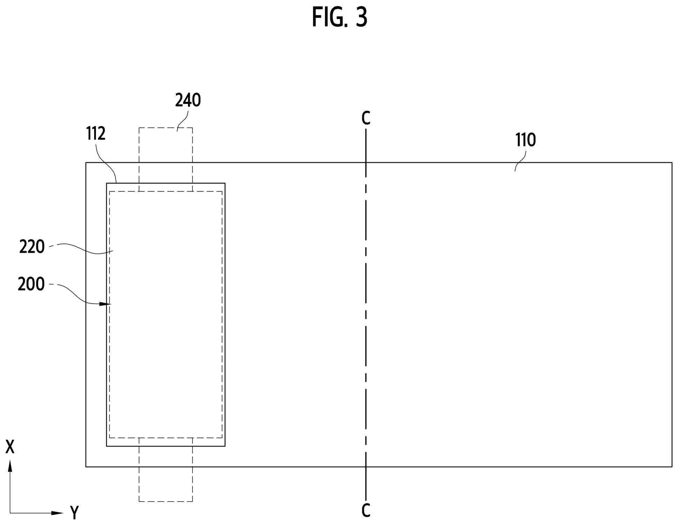

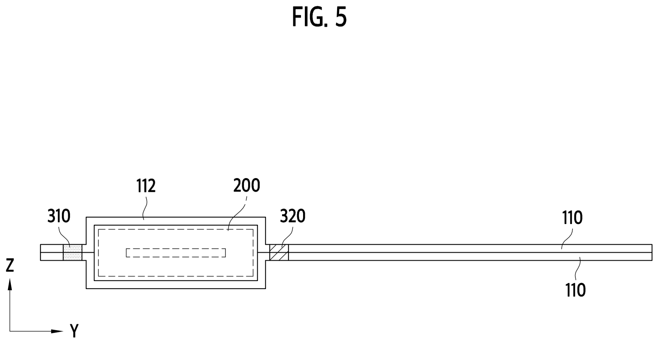

FIG. 3 to FIG. 5 are drawings for explaining a method of manufacturing the secondary battery 100 according to an exemplary embodiment of the present disclosure. Specifically, FIG. 3 is a schematic front view of the pouch sheet 110 for forming a case 50 of the secondary battery 100 according to an exemplary embodiment of the present disclosure. FIG. 4 is a schematic front view and FIG. 5 is a schematic side view for explaining a sealed area 310 and a re-sealed area 320 in the pouch sheet 110 of the secondary battery 100 according to an exemplary embodiment of the present disclosure.

Referring to FIG. 3 to FIG. 5, the battery case 50 of the secondary battery 100 according to various exemplary embodiments may be manufactured using at least one pouch sheet 110.

For example, the case 50 of the secondary battery 100 may be formed by the electrode assembly 200 being sandwiched between two pouch sheets 110, and joining the peripheral area where the electrode assembly 200 is placed by sealing or resealing. Each of the two pouch sheets 110 may contain the recess 112, and as the two pouch sheets 110 are joined, a space for the receiving part 150 in which the electrode assembly 200 is accommodated may be formed in the inner space of the two recesses 112. For example, the two pouch sheets 110 may be substantially symmetrical or have identical structures.

Even though not illustrated, in another exemplary embodiment, the case 50 of the secondary battery 100 may also be formed by a method that a single sheet of the pouch sheet 110 is folded so that both ends overlap each other, the electrode assembly 200 is positioned so as to be inserted on the inner side of the folded portion, and the open end is joined so that the electrode assembly 200 is sealed from the inside.

In the process of manufacturing the secondary battery 100, the battery case 50 is formed by overlapping the two pouch sheets 110, the electrode assembly 200 is accommodated inside, and then, electrolyte is injected into the inside of the battery case 50 and the edges of the battery case 50 are sealed.

Specifically, the sealing operation may be performed in the order that the remaining areas, except for one edge among the multiple edges forming the sealed area 310 of the battery case 50, are sealed first, electrolyte is injected through one unsealed edge, and then the unsealed edge is also sealed. Here, the one edge which is sealed last in the battery case, namely, the edge through which electrolyte is injected may correspond to an edge (for example, the right edge of the sealed area 310 of the pouch sheet 110 illustrated in FIG. 4) located relatively far from another edge where the recess 112 is formed in the pouch sheet 110.

Next, after the sealed area 310, which is the entire edge of the battery case 50, is sealed, the secondary battery 100 may be formed. The formation is a process of forming a solid electrolyte interphase (SEI) layer on the surface of the electrodes 220 of the electrode assembly 200 and causing them to be charged through a charging process, and through the formation, the secondary battery 100 may be charged to supply power.

In various exemplary embodiments of the present disclosure, the electrolyte applied to the secondary battery 100 may include a gel polymer electrolyte. The polymer electrolyte may maintain the thickness of the battery constant compared to general liquid electrolytes, and there may be an advantage in that a thin film battery with excellent electrical and chemical safety may be manufactured due to the unique adhesive strength of the gel.

As such, when the electrolyte applied to the secondary battery 100 is a gel polymer electrolyte, a curing process may be further performed to gelate the liquidstate gel polymer electrolyte. In a method for manufacturing a secondary battery according to an exemplary embodiment of the present disclosure, the curing process may be performed at a stage immediately prior to performing the formation of the secondary battery. However, it is not limited to this manufacturing sequence, and in another exemplary embodiment, the curing process for gelation may in some cases be performed after formation has been performed.

Next, after curing and formation of the secondary battery 100 is performed, cutting a portion of the sealed battery case 50 for degassing may be performed. For example, the cutting operation for the case 50 of the secondary battery 100 may be performed along the C-C line of the pouch sheet 110 illustrated in FIG. 3 and FIG. 4.

Then, after degassing and re-sealing operations are performed under vacuum conditions, a packaging process of the secondary battery 100 may be completed. Here, the re-sealing operation may be performed in the re-sealed area 320 illustrated in FIG. 4 and FIG. 5. The re-sealed area 320 may include at least a portion of the area opened by the cutting operation performed along the C-C line, among the peripheral areas (in other words, areas corresponding to the sealing part 170 of the battery case 50) of the edge of the recess 112 inside the case 50 where the electrode assembly 200 is placed in the secondary battery 100. For example, as illustrated in FIG. 4, the re-sealed area 320 is an area that extends in the x-axis direction among the areas open in the direction toward the C-C line in the recess 112 and overlaps with the sealed area 310. Specifically, the re-sealed area 320 may be an area adjacent to the recess 112.

When manufacturing the secondary battery 100 according to the process sequence described above, during the process of injecting electrolyte, electrolyte may be stained on the re-sealed area 320, which may result in improper sealing in the re-sealed area 320, and thus oxygen or moisture may enter the electrode assembly 200 inside the battery case 50. There may also be problems that detract from the aesthetic appeal of the secondary battery 100. Specifically, when the gel polymer electrolyte is used, during the curing process, the electrolyte hardens and may remain in a jellylike form in the re-sealed area 320, and accordingly, there may be issues with the seal not being properly sealed or with a greater likelihood of appearance defects.

Accordingly, with the secondary battery 100 according to various exemplary embodiments of the present disclosure, by preventing the presence of electrolytes in the designated area where the masking tape was attached, the occurrence of defects caused by the electrolytes such as the above may be prevented, by attaching the masking tape in advance to some areas of the pouch sheet 110 forming the battery case 50, after going through a prescribed process, cutting the battery case 50 for degassing, removing the attached masking tape that has electrolyte on it, and performing degassing and re-sealing operations after removing the masking tape.

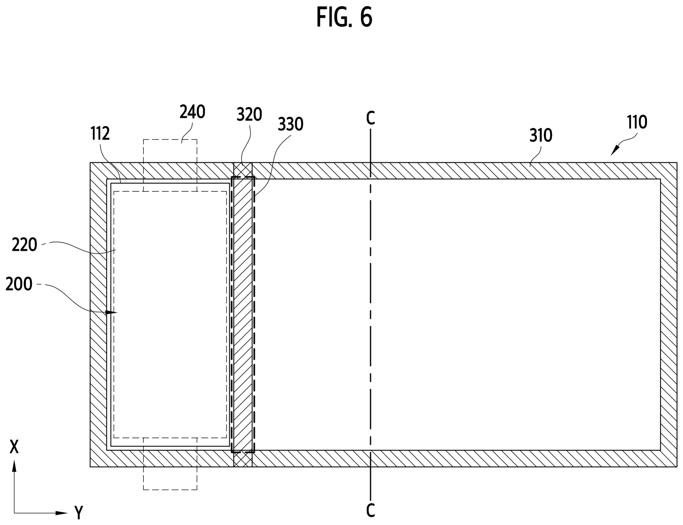

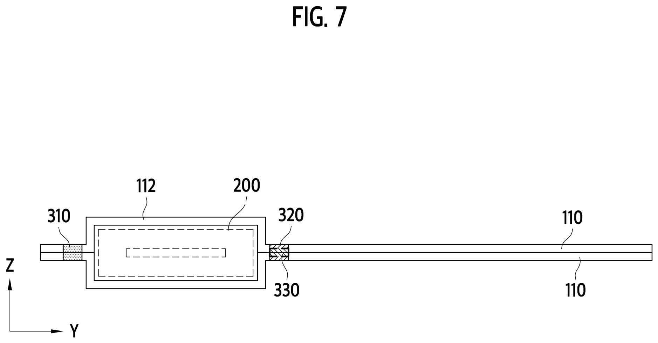

FIG. 6 is a schematic front view of the pouch sheet 110 and FIG. 7 is a schematic side view of the pouch sheet 110 for explaining an area 330 where the masking tape is attached in the pouch sheet 110 forming the battery case 50 of the secondary battery 100 according to an exemplary embodiment of the present disclosure.

To each of opposite sides of the two pouch sheets 110 facing each other to form the battery case 50, the masking tape may be pre-attached corresponding to the area 330, which corresponds to at least a portion of the re-sealed area 320.

Here, in order to prevent the sealed area 310 from being unsealed due to the masking tape or the adhesion of the sealed area 310 from being disabled due to the removal of the masking tape, the masking tape may not be attached to the area where the re-sealed area 320 and the sealed area 310 overlap.

The area 330, where the masking tape is pre-attached on the pouch sheet 110, may have a larger margin area than any other area in the re-sealed area 320 except the sealed area 310.

For example, the width of the area 330 where the masking tape is attached may be set in order to be equal to or greater than the width of the re-sealed area 320, and accordingly, it is possible to more reliably prevent the re-sealed area 320 from being stained by the electrolyte.

In an exemplary embodiment, the masking tape may be attached to each inner surface of the two overlapping pouch sheets 110. The masking tape is a film type with an adhesive layer formed on only one side, and the masking tape may be attached to the pouch sheet 110 by the adhesive layer.

The masking tape may be attached to each of the two pouch sheets 110. Each of the masking tapes attached to the two pouch sheets 110 may have their nonadhesive film sides facing each other, and electrolyte may be injected between the two film surfaces of each masking tape.

Each masking tape may be removed after that the electrode assembly 200 is stored in the recess 112 between the two pouch sheets 110, the electrolyte is injected, the sealed area 310 is sealed, and the electrolyte is selectively cured. Formation of the secondary battery 100 is performed and cutting is performed along the C-C line for degassing. Further, after removing the masking tape as such, degassing and resealing operations may be performed under vacuum.

For example, when gel polymer electrolyte is applied, since the curing process has already been performed prior to the cutting process, the electrolyte is in a hardened state, and thus even if the battery case 50 is cut and the masking tape is removed from the inner side of each pouch sheet 110, no more electrolyte may leak into the re-sealed area 320.

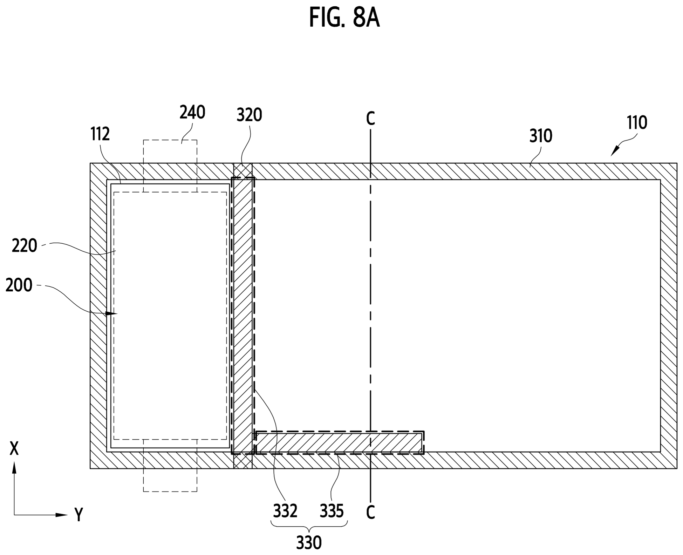

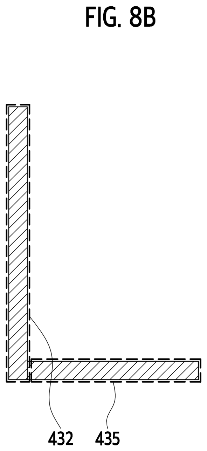

FIG. 8a is a schematic front view illustrating the area 330 to which the masking tape is attached in the pouch sheet 110 of the secondary battery 100 according to another exemplary embodiment of the present disclosure. FIG. 8b is a drawing schematically illustrating the shape of the masking tape attached to the pouch sheet 110 of FIG. 8a.

Referring to FIG. 8a and FIG. 8b, in the process of manufacturing the secondary battery 100 according to various exemplary embodiments, the masking tape pre-attached to the pouch sheet 110 for forming the battery case 50 may include a re-sealed part 432 corresponding to the re-sealed area 320 and an extended part 435 formed by extending in one direction from the re-sealed part 432.

The re-sealed part 432 may be attached to a first area 332 corresponding to the area excluding the sealed area 310 in the re-sealed area 320 of the pouch sheet 110. The extended part 435 may have a shape extending in the Y-axis direction from one side (or multiple sides) of the first area 332, and for example, the extended part 435 may be located in a second area 335, which does not correspond the re-sealed area 320.

By masking the pouch sheet 110 using the masking tape that further includes the extended part 435 formed as an extension from the re-sealed part 432, when removing the masking tape after the pre-cutting operation for degassing, a worker may easily remove the masking tape while holding the extended part 435.

The re-sealed part 432 and the extended part 435 of the masking tape may be configured as an integrated unit, but the adhesive layer of the masking tape may only be formed on the re-sealed part 432. For example, the extended part 435 of the masking tape may not have adhesion on both sides of the film layers constituting the masking tape. However, the extended part 435 is not limited to these exemplary embodiments, and the adhesive layer may be formed on each of a re-sealed part 430 and the extended part 435.

In various exemplary embodiments of the present disclosure, the number and positions of the extended part 435 of the masking tape and the second area 335 on the pouch sheet 110 where the extended part 435 is located are not limited to those illustrated in FIG. 8a and FIG. 8b. For example, the extended part 435 may be formed as an extension from each end of the re-sealed part 432, or be formed as an extension from each end and center of the re-sealed part 432, and in addition thereto, various modified structures may be applied.

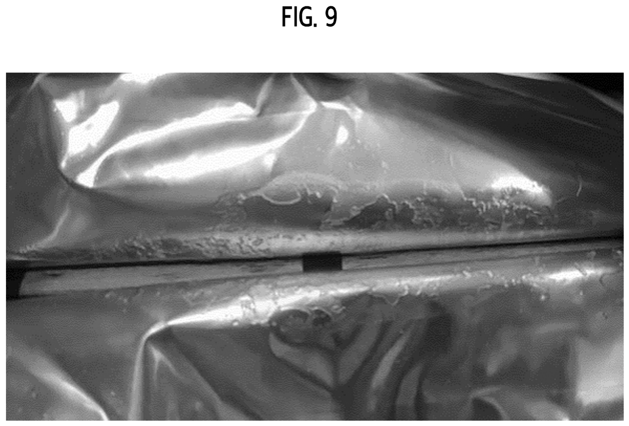

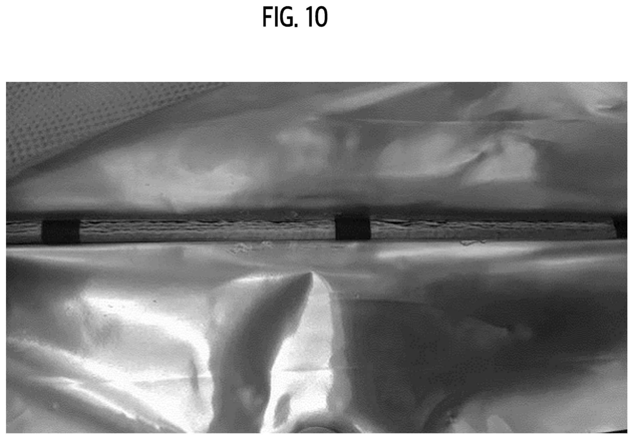

FIG. 9 is an image of the peripheral area of the re-sealed area 320 of the secondary battery 100 manufactured without attaching the masking tape using a manufacturing method according to a comparative exemplary embodiment, and FIG. 10 is an image of a peripheral area of the re-sealed area 320 of the secondary battery 100 manufactured using the masking tape according to an exemplary embodiment of the present disclosure.

When referring to FIG. 9 and FIG. 10, in the comparative exemplary embodiment of FIG. 9 without using the masking tape, it is visually identified that electrolyte remains on the peripheral area of the pouch sheet 110 of the re-sealed area 320, causing stains, but for the results according to the exemplary embodiment of FIG. 10 using the masking tape, it is identified that no appearance defect occurs since no electrolyte remains in the peripheral area of the pouch sheet 110 of the re-sealed area 320.

In the present disclosure, terms indicating direction such as " upper" and "lower" are used, but the terms are only for convenience of explanation only, and it is obvious to those skilled in the art that terms may vary depending on the location of the object being targeted, the location of the observer.

In the above, various embodiments of the present disclosure are described in detail. However, it will be apparent to those with average knowledge in the technical field that scope of rights of this disclosure is not limited thereto, and various modifications and variations are possible without departing from the technical spirit of the present disclosure as set forth in the claims. Further, the above-described exemplary embodiment may be implemented with some elements deleted, and each exemplary embodiment may be implemented in combination with each other.

## Claims

1. A method of manufacturing a secondary battery, the method comprising:
preparing at least one pouch sheet to which a masking tape is attached;
accommodating an electrode assembly inside a battery case formed by overlapping the at least one pouch sheet;
injecting an electrolyte inside the battery case and sealing an edge of the battery case;
performing formation of the secondary battery;
cutting a portion of an area of the battery case, removing the masking tape and degassing; and
re-sealing an area corresponding to the removed masking tape.

2. The method of claim 1, wherein an area where the masking tape is
attached on the pouch sheet comprises at least a portion of the re-sealed area on which the re-sealing is performed, but
the area further does not comprise a sealed area on which the sealing is performed.

3. The method of claim 1, wherein the masking tape comprises:
a re-sealed part corresponding to the re-sealed area on which the resealing is performed; and
an extended part that is formed by extending in one direction from the re-sealed part.

4. The method of claim 3, wherein the extended part does not comprise an adhesive layer.

5. The method of claim 1, wherein the electrolyte comprises a gel-
electrolyte, and
further comprising a curing process to gelate the gel-electrolyte before performing the formation.

6. The method of claim 1, wherein sealing the edge of the battery case comprises:
sealing a portion of the edge that is open of the battery case; and
after injecting the electrolyte inside the battery case, sealing a remaining portion of the opened edge.

7. A pouch sheet to manufacture a battery case of a secondary battery, the pouch sheet comprising:
a recess to accommodate an electrode assembly; and
a masking tape detachably attached to a side adjacent to the recess,
wherein the masking tape extends along a length direction of the area that is re-sealed in order to correspond at least partially to the area that is re-sealed in a process of manufacturing the secondary battery.

8. The pouch sheet of claim 7, wherein the masking tape comprises:
a re-sealed part corresponding to the area that is re-sealed; and
an extended part that is formed by extending in a direction other than the length direction in the re-sealed part.

9. The pouch sheet of claim 8, wherein the re-sealed part comprises an
adhesive layer, and
wherein the extended part does not comprise the adhesive layer.

10. The pouch sheet of claim 7, wherein the masking tape is removed after a cutting operation for degassing and before a degassing operation in the process of manufacturing the secondary battery.
